# EUROPEAN PATENT SPECIFICATION

(11) **EP 2 586 655 B1**
(45) Date of publication and mention of the grant of the patent: **30.11.2016**
(21) Application number: 11186437.7
(22) Date of filing: 25.10.2011
(51) Int. Cl.: B60N 3/00, B60R 7/06

(54) **Foldaway table, especially for an industrial or commercial vehicle**
Klapptisch, insbesondere für ein Industrie- oder Nutzfahrzeug
Table rétractable, spécialement pour un véhicule industriel ou commercial

(43) Date of publication of application: 01.05.2013
(73) Proprietor: IVECO S.p.A., 10156 Torino (IT)
(72) Inventor: Guarino, Salvatore, 10044 Pianezza (IT)
(74) Representative: Franzolin, Luigi

(56) References cited:
- FR-A1- 2 941 411
- GB-A- 2 215 190

## Description

### Application field of the invention

The present invention refers to the field of the internal furnishing of vehicle cabins, in particular of industrial and commercial vehicles. More precisely, the invention refers to a foldaway table.

### Description of the prior art

Making vehicle furnishing is particularly complex since the accessories in the vehicle are required to be at the same time functional, robust and handy, but above all they are required to occupy a small.

A foldaway table according to the preamble of claim 1 is disclosed in GB-2215190A.

### Summary of the invention

Therefore the aim of the present invention is to overcome all the drawbacks mentioned above and to provide a foldaway table, especially for an industrial or commercial vehicle, which is particularly robust when in use and at the same time it is easy to store and occupies a small space when stored.

It is an object of the present invention a foldaway table especially for an industrial or commercial vehicles, according to claim 1.

In particular, the foldaway table that is object of the present invention comprises a bearing plate having two opposite sides, an upper bearing surface and a corresponding lower surface, and at least two portions reciprocally arranged in relation to a approaching edge and comprises also two support arms connected to said lower surface, each one in the proximity of one of said opposite sides. Moreover, the foldaway table comprises a constraint system that reciprocally connects said portions of the bearing plate and each one of said support arms to said lower surface. Such constraint system is suitable to allow each arm to move between a proximal, an adhesion and a distal position of the table in relation to said lower surface, and to allow said portions of the bearing plate to reciprocally fold one over the other only when at least one of said arms is in proximal position in relation to said lower surface.

Said constraint system is also suitable to allow the movement of each one of said arms, only when said portions of the bearing plate are stretched out with respect to said edge, lying on the same lying plane.

As it will be clear from the following detailed description, such constraint system is realized so that the opening of the plate conditions the opening of the arms and the closing of the arms conditions the closing of the bearing plate.

In other words, it works as if there were virtual locking means that automatically enable/disable in a reversible way the reciprocal movement between arms and bearing plate and between the portions of the bearing plate. All this simplifies the operations needed to use the table or to store it.

Advantageously, the number of the components is particularly limited.

Advantageously, when the table is hooked to the vehicle dashboard, in usage position, it is stable. Indeed, any movement of the reciprocally movable parts, namely the arms, is prevented because they are engaged in specially provided seats in the vehicle dashboard, so that the table seems to be made in a single piece.

It is also object of the present invention an industrial or commercial vehicle comprising the aforementioned foldaway table.

The claims are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows an axonometric view, from below, of the foldaway table that is object of the present invention, in usage configuration;
figure 2 shows, according to another axonometric view, the table of figure 1, in usage configuration, wherein it is supported by a vehicle dashboard, the latter represented by a dotted line,
figures 3 and 4 show the table of the previous figures during and after its insertion in a specially provided housing in the vehicle dashboard,

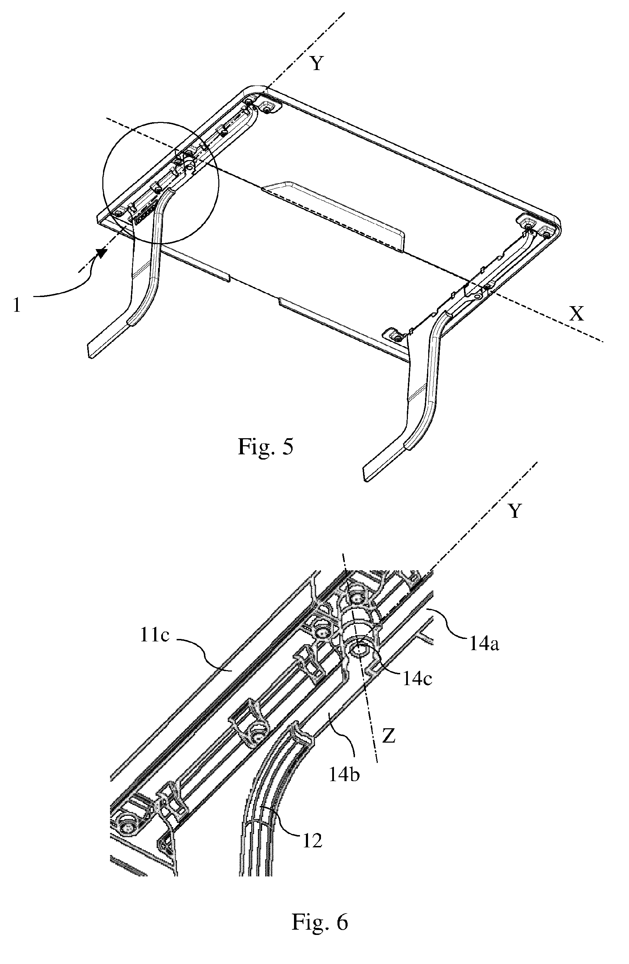

figure 5 shows the same as figure 1 with a detail in evidence, figure 6 shows an enlarged view of the detail of figure 5,
figures 7, 9, 11 show a closing sequence of the table according to the same view of figure 5,
figures 8, 10, 12 show the detail of figure 6 according to the aforementioned closing sequence;
figure 13 shows an axonometric view with parts in transparency of the table of figure 1 in a storage closed configuration.

In the figures the same reference numbers and letters identify the same elements or components.

### Detailed description of preferred embodiments of the invention

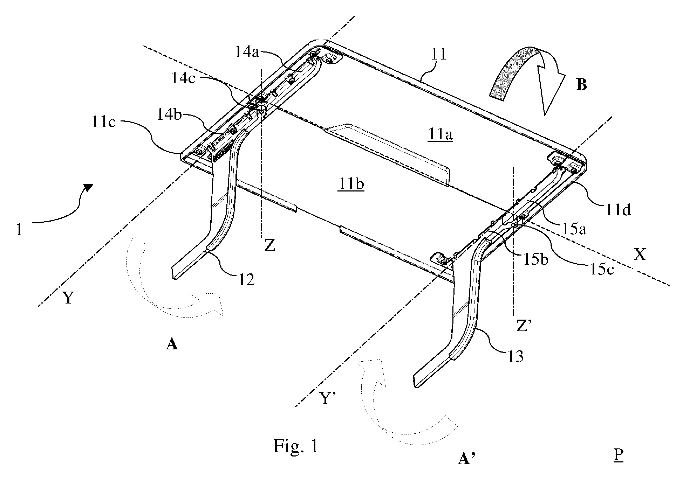

Table 1, with particular reference to figure 1, comprises a bearing plate 11 having two opposite sides 11c, 11d. When the bearing plate has a rectangular shape, such sides may coincide with two opposite edges of the plate.

The bearing plate 11 comprises an upper bearing surface 11f and a corresponding lower surface 11e.

Moreover, it is formed by at least two portions 11a, 11b reciprocally arranged between each other in relation to a approaching edge X, which preferably intersects the two sides 11c and 11b and is preferably perpendicular to them. Two support arms 12 and 13 are connected to the lower surface 11e, each one in the proximity of one of the opposite sides 11c, 11d.

The two portions 11a and 11b of the bearing plate 11 are reciprocally hinged along the approaching edge X so that they can reciprocally fold one over the other, see the arrow B of figure 1. When such portions are stretched on in relation to X they define a common lying plane P.

The arms 12 and 13 are hinged along the sides 11c and 11d to the lower surface 11e of the bearing plate 11 so that each arm 12, 13 can move between a proximal, an adhesion and a distal position of use of the table 1, in relation to the lower surface 11e.

The arms 12, 13 and the bearing plate 11, in distal position, may form any angle. Such angle is preferably of 90°.

Preferably, the arms are hinged so that they can close, the one towards the other, see arrows A and A' of figure 1, over the lower surface 11e of the bearing plate 11, similarly to what the side-arms of glasses frames do.

The table comprises also locking means that enable said portions 11a, 11b of the bearing plate 11 to reciprocally fold one over the other only when at least one of, but preferably both, the arms 12 and 13 are in proximal position in relation to the lower surface 11e.

The constraint system implicitly integrates said locking means.

The reciprocal adhesion of the portions 11a and 11b of the bearing plate 11 inhibits the movement of the arms 12 and 13 to the distal position in relation to surface 11e.

Such mechanism is preferably obtained by means of a rod 14 (15) hinged on the lower surface 11e, defining a first axis of rotation Y (Y') lying on the lying plane P. The rod has a long and narrow shape and has two portions 14a and 14b (15a and 15b). One of the two portions 14a is integral with the respective arm 12 (13) and is connected to the other portion 14b by means of another hinge 14c (15c) arranged in correspondence of the approaching edge X.

The lying plane P may also be identified by the axis of rotation Y and/or Y' and the edge X.

This further hinge 14c (15c) defines a second axis of rotation Z (Z') which is always perpendicular in relation to the first axis of rotation Y (Y').

The aforementioned mechanism can be applied to one or to both arms. The reference numbers of the second arm 13 are given in brackets.

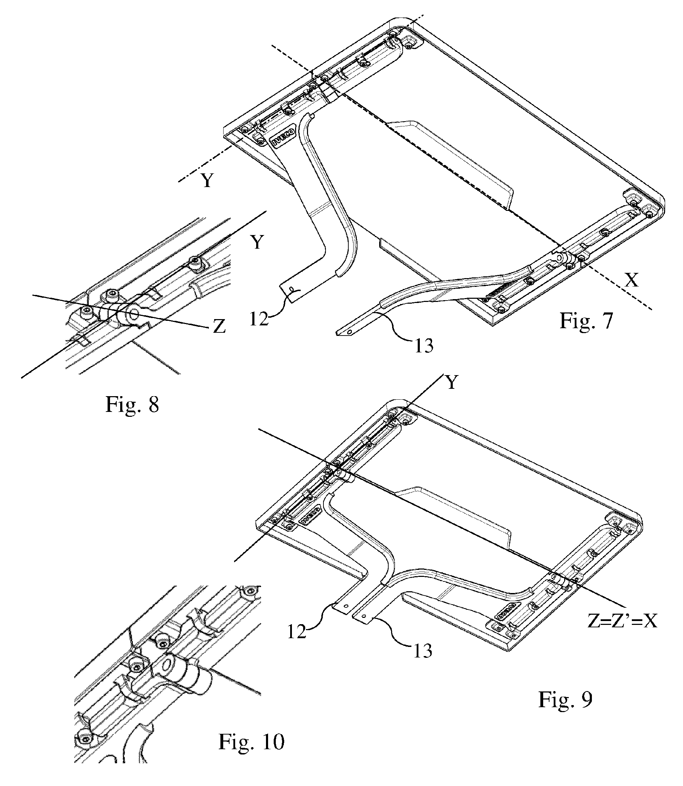

When the arm 12 (13) is folded over the lower surface 11e, see figures 9-13, the axis of rotation Z (Z') is parallel or is tangent or coincides with the edge X.

The edge X, indeed, may have any shape. When both arms are equipped with the aforementioned rod 14 (15) having two portions 14a, 14b (15a, 15b), it is necessary that the edge X is such to allow the axis Z and Z' to coincide, when both arms 12 and 13 are folded over the lower surface.

In fact, an alternative configuration, not shown, provides only one arm comprising the aforementioned rod having two portions hinged between each other and to the bearing plate 11. The other arm is hinged only at one of the two portions of the bearing plate. According to such alternative configuration, the two portions of the bearing plate may be directly hinged between each other, namely not by means of the rod 15, and preferably in the proximity of the arm hinged to only one of the two portions of the bearing plate.

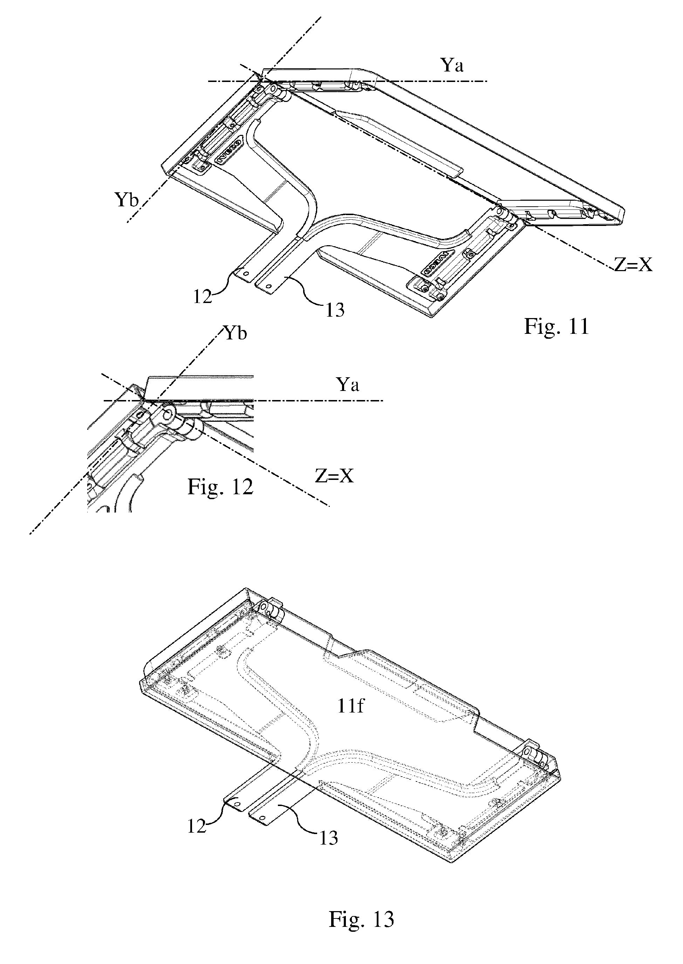

With particular reference to figure 11, when the bearing plate 11 starts to fold over itself, the two portions of the rod 14, 14a and 14b, hinged to the respective two portions 11a and 11b of the bearing plate 11, define two respective and separated axis of rotation Ya and Yb not aligned between each other. This prevents any rotation of the rod 14 in relation to the bearing plate 11, until the two portions 11a and 11b of the bearing plate are again lying on the common lying plane P.

Dowels with respective seats may be provided on the hinges in order to stop the arms 12, 13 in a fully proximal and/or distal position.

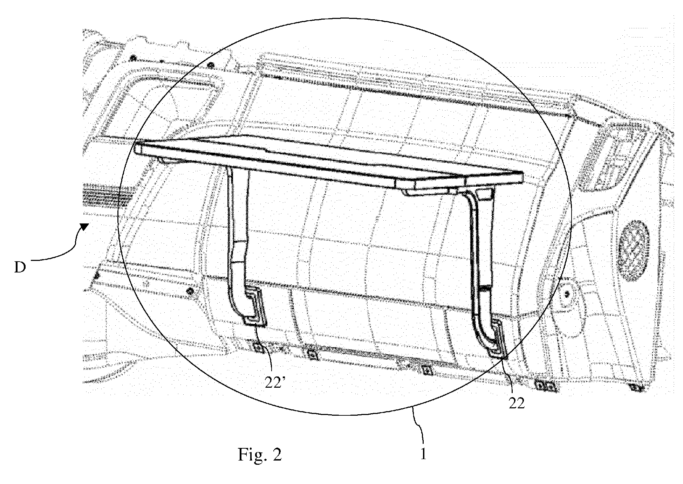

When the table is in use, see figure 2, the arms 12 and 13 are inserted in specially provided seats/recesses in the vehicle dashboard D. Such seats prevent the closing of the arms 12 and 13 over the lower surface 11e, thus the table is virtually monolithic, the vehicle dashboard D cooperating to its stability.

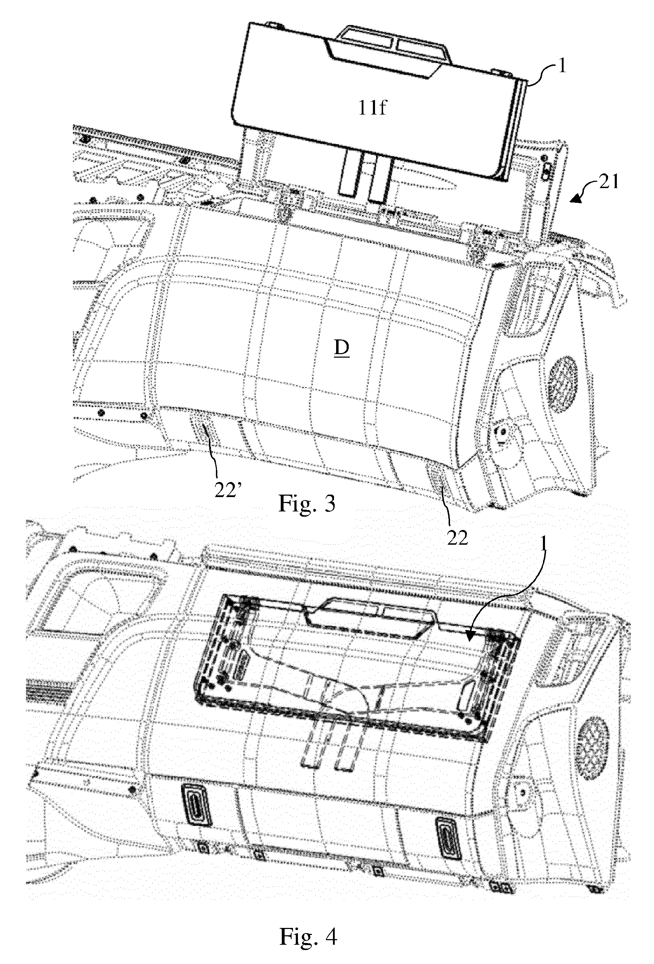

The vehicle dashboard D may advantageously comprise
- a container 21 for housing the table 1, see figures 3 and 4 and
- a support recess (22,22') for each one of said arms (12, 13).

From the description set forth above it will be possible for the person skilled in the art to embody the invention with no need of describing further construction details.

## Claims

1. Foldaway table (1) especially for an industrial or commercial vehicle, comprising
- a bearing plate (11) having two opposite sides (11c, 11d), an upper bearing surface (11f) and a corresponding lower surface (11e), and having at least two portions (11a, 11b) reciprocally placed between each other in relation to a approaching edge (X),
- two support arms (12, 13) connected to said lower surface (11e), each one in the proximity of one of said opposite sides (11c, 11d), **characterised in that** a constraint system reciprocally connects said portions (11a, 11b) of the bearing plate (11) and each one of said support arms (12, 13) to said lower surface (11e); the constraint system being suitable to:
- allow each arm (12, 13) to move between a proximal position of adhesion, and a distal usage position of the table (1), in relation to said lower surface (11e), and
- allow said portions (11a, 11b) of the bearing plate (11) to reciprocally fold one over the other only when at least one of said arms (12, 13) is in proximal position in relation to the lower surface (11e).

2. Table according to claim 1, wherein said constraint system is also suitable to allow the movement of each one of said arms (12, 13), only when said portions (11a, 11b) of the bearing plate (11) are stretched out with respect to said edge (X), lying on the same lying plane (P).

3. Table according to one of the previous claims, wherein said constraint system comprises, for at least one arm (12, 13), a rod (14, 15) hinged on said lower surface (11e), defining a first axis of rotation (Y) lying on the lying plane (P); the rod being long and narrow and having two portions (14a, 14b), (15a, 15b)); one portion being integral with the respective arm (12, 13) and connected to the other portion by means of a second hinge (14c, 15c) arranged in correspondence of said approaching edge (X) and defining a second axis of rotation (Z) perpendicular in relation to the first axis of rotation (Y).

4. Table according to one of the previous claims, wherein said constraint system comprises stop means suitable to stop said arms (12, 13) in a fully proximal or distal position.

5. Industrial or commercial vehicle comprising a foldaway table (1) according to any of the previous claims.

6. Vehicle according to claim 5, comprising a dashboard (2) having
- a container (21) for housing the table (1) and
- a support recess (22,22') for each one of said arms (12, 13).

## Patentansprüche

1. Klapptisch (1), insbesondere für ein Industrie- oder Nutzfahrzeug, umfassend:
- eine Stützplatte (11) mit zwei gegenüberliegenden Seiten (11c,11d), einer oberen Lagerfläche (11f) und einer entsprechenden unteren Oberfläche (11e), mit zumindest zwei Bereichen (11a, 11b), die gegenüberliegend bezüglich einer Näherungskante (X) angeordnet sind,
- zwei Tragarmen (12,13), die mit der unteren Oberfläche (11e) verbunden sind, von denen jeder in der Nähe von einer der gegenüberliegenden Seiten (11c, 11d) angeordnet ist, **dadurch gekennzeichnet, dass** ein Führungssystem die Bereiche (11a, 11b) mit der Stützplatte (11) und jeden der Tragarme (12,13) mit der unteren Oberfläche (11e) verbindet, welches Führungssystem dazu geeignet ist,
- jedem Arm (12,13) zu ermöglichen, sich zwischen einer nahen Anlageposition und einer entfernten Nutzungsposition des Tisches (1) bezüglich der unteren Oberfläche (11e) zu bewegen, und
- es den Bereichen (11a, 11b) der Stützplatte (11) zu ermöglichen, sich ausschließlich dann übereinander zu falten, wenn zumindest einer der Arme (12,13) sich in der nahen Position bezüglich der unteren Oberfläche (11e) befindet.

2. Tisch gemäß Anspruch 1, bei welchem das Führungssystem ferner dazu vorgesehen ist, eine Bewegung von jedem der Arme (12,13) ausschließlich dann zuzulassen, wenn die Bereiche (11a, 11b) der Stützplatte (11) bezüglich der Kante (X) ausgestreckt sind und in der gleichen Ebene (P) liegen.

3. Tisch gemäß einem der vorhergehenden Ansprüche, bei welchem das Führungssystem für zumindest einen Arm (12,13) einen Stab (14,15) umfasst, der an die untere Oberfläche (11e) angelenkt ist und eine erste Rotationsachse (Y) festlegt, die auf der Lageebene (P) liegt, welcher Stab lang und schmal ist und zwei Bereiche ((14a, 14b), (15a, 15b)) umfasst, wobei ein Bereich einteilig mit dem jeweiligen Arm (12,13) ausgebildet ist und mit dem anderen Bereich durch ein zweites Scharnier (14c,15c) verbunden ist, das entsprechend der Näherungskante (X) angeordnet ist und eine zweite Rotationsachse (Z) senkrecht zur ersten Rotationsachse (Y) definiert.

4. Tisch gemäß einem der vorhergehenden Ansprüche, bei welchem das Führungssystem Anschlagmittel zum Anhalten der Arme (12,13) in einer vollständig eng anliegenden oder entfernten Position umfasst.

5. Industrie- oder Nutzfahrzeug, umfassend einen Klapptisch (1) gemäß einem der vorhergehenden Ansprüche.

6. Fahrzeug gemäß Anspruch 5, umfassend ein Armaturenbrett (2), mit:
- einem Behälter (21) zur Aufnahme des Tisches (1), und
- einer Aufnahme (22,22') für jeden der Arme (12,13).

## Revendications

1. Table rétractable (1), en particulier pour un véhicule industriel ou commercial, comprenant :
- une plaque porteuse (11) ayant deux côtés opposés (11c, 11d), une surface porteuse supérieure (11f) et une surface inférieure correspondante (11e), et ayant au moins deux parties (11a, 11b) placées mutuellement de part et d'autre d'un bord d'approche (X),
- deux bras de support (12, 13) connectés à ladite surface inférieure (11e), chacun à proximité de l'un desdits côtés opposés (11c, 11d), caractérisée en ce qui :
- un système de contrainte connecte mutuellement lesdites parties (11a, 11b) de la plaque porteuse (11) et chacun desdits bras de support (12, 13) à ladite surface inférieure (11e), le système de contrainte étant adapté pour :
- permettre le déplacement de chaque bras (12, 13) entre une position proximale d'adhérence et une position d'utilisation distale de la table (1), en relation avec ladite surface inférieure (11e) ; et pour
- permettre le repliement mutuel desdites parties (11a, 11b) de la plaque porteuse (11) l'une sur l'autre seulement lorsqu'au moins l'un desdits bras (12, 13) est en position proximale en relation avec la surface inférieure (11e).

2. Table selon la revendication 1, dans laquelle ledit système de contrainte est également adapté pour permettre le déplacement de chacun desdits bras (12, 13), seulement lorsque lesdites parties (11a, 11b) de la plaque porteuse (11) sont étendues par rapport audit bord (X), en étant étendues dans le même plan d'extension (P).

3. Table selon l'une des revendications précédentes, dans laquelle ledit système de contrainte comprend, pour au moins un bras (12, 13), une tige (14, 15) montée par charnière sur ladite surface inférieure (11e), définissant un premier axe de rotation (Y) s'étendant sur le plan d'extension (P) ; la tige étant longue et étroite et ayant deux parties ((14a, 14b), (15a, 15b)) ; une partie étant d'un seul tenant avec le bras respectif (12, 13) et étant connectée à l'autre partie au moyen d'une deuxième charnière (14c, 15c) agencée en correspondance avec ledit bord d'approche (X) et définissant un deuxième axe de rotation (Z) perpendiculaire au premier axe de rotation (Y).

4. Table selon l'une des revendications précédentes, dans laquelle ledit système de contrainte comprend un moyen d'arrêt adapté pour arrêter lesdits bras (12, 13) dans une position complètement proximale ou complètement distale.

5. Véhicule industriel ou commercial comprenant une table rétractable (1) selon l'une quelconque des revendications précédentes.

6. Véhicule selon la revendication 5, comprenant un tableau de bord (2) ayant :
- un conteneur (21) pour loger la table (1) et
- un évidement de support (22, 22') pour chacun desdits bras (12, 13).
